# FASCICULE DE BREVET EUROPEEN

(11) **EP 2 964 052 B1**
(45) Date de publication et mention de la délivrance du brevet: **26.04.2017**
(21) Numéro de dépôt: 14716404.0
(22) Date de dépôt: 04.03.2014
(51) Int. Cl.: A44C 17/04, G04B 45/00, A44C 5/00

(54) **ÉLÉMENT CONSTITUTIF D'UNE PIÈCE DÉCORATIVE COMPORTANT UN LOGEMENT EN CAOUTCHOUC**
ELEMENT ZUR BILDUNG EINES DEKORTEILS MIT EINEM GUMMIAUFNAHMEELEMENT
ELEMENT FORMING A DECORATIVE PART COMPRISING A RUBBER RECEIVING ELEMENT

(30) Priorité: 04.03.2013 CH 537132013
(43) Date de publication de la demande: 13.01.2016
(73) Titulaire: La Tete Dans Les Etoiles SA, 1227 Carouge (CH)
(72) Inventeur: VAUCHER, Pascal-Vincent, CH-1227 Carouge (CH)
(74) Mandataire: Cronin, Brian Harold John
(86) Numéro de dépôt international: PCT/IB2014/000240
(87) Numéro de publication internationale: WO 2014/135952

(56) Documents cités:
- GB-A- 826 492
- JP-A- 2002 058 512
- KR-U- 20090 011 868
- US-A1- 2004 172 969

## Description

La présente invention se rapporte à un élément constitutif d'une pièce décorative comportant un logement en matière souple tel que le caoutchouc.

Il est déjà connu de l'état de la technique des objets de parure, comme des montres par exemple, utilisant le caoutchouc associé à du métal notamment. Le métal donne à l'ensemble sa rigidité, alors que le caoutchouc confère une esthétique particulière.

EP1350438 décrit un objet de parure permettant de disposer des diamants de manière à ce qu'ils soient entourés de caoutchouc, tout en garantissant qu'ils sont fixés de manière sûre. Elle concerne tout particulièrement un objet de parure du type comportant une structure de base en métal et une couche de recouvrement disposée sur la structure de base, sur une part de sa surface. La couche de recouvrement forme une découpe destinée à recevoir une pierre, et la structure de base est munie de colonnes, formant des grains destinés au sertissage de la pierre, et qui s'étendent dans la découpe, au voisinage de la couche de recouvrement. Les grains sont dégagés sur une partie au moins de leur hauteur. Ils s'étendent sur toute la hauteur de la couche de recouvrement, de manière à permettre leur déformation en vue d'assurer le sertissage de la pierre. Les pierres ne peuvent, bien sûr, pas être accolées les unes aux autres. Aussi, pour conférer une unité à l'ensemble, la découpe comporte une partie plane, munie d'un revêtement de matériau présentant un aspect et une couleur similaires à ceux de la couche de recouvrement. Contrairement à la présente invention, ce type de sertissage nécessite des grains pour maintenir la pierre. JP 2002 058512, concerne une bague dont la matière souple entoure une pièce rapportée à l'intérieur de la bague. Il n'est pas question que la matière souple entoure la structure rigide de la bague autour de la pièce rapportée, en conséquence la bague a un aspect métallique. Une maison horlogère a combiné pour une montre-bracelet un métal serti de diamants doté d'un bracelet en caoutchouc. Ne pouvant les sertir directement sur le caoutchouc, les diamants sont fixés sur le métal, par sertissage, et l'effet esthétique recherché est atténué par la distance entre les diamants et le bracelet. La présente invention répond à cet inconvénient par un sertissage du diamant directement sur le caoutchouc.

Le but de la présente invention est de sertir des pièces rapportées sur une matière souple par exemple du caoutchouc sans utiliser d'inserts pour créer notamment des pièces d'horlogerie, de bijouterie ou de joaillerie à effet esthétique fort.

Conformément à l'invention, un élément constitutif d'une pièce décorative par exemple une pièce d'horlogerie, de bijouterie ou de joaillerie, comporte au moins un logement creux dans une matière souple disposée sur une structure rigide, les extrémités supérieures du ou des logements présentant une surface d'appui permettant par compression de ladite matière souple sur ladite structure rigide de sertir dans ledit logement une pièce rapportée dont la périphérie en matière dure a une forme et des dimensions qui correspondent à celles dudit logement et qui présente une partie protubérante qui vient comprimer ladite matière souple sur ladite structure rigide lorsque ladite pièce rapportée est introduite dans ledit logement de manière à ce que ladite pièce rapportée soit fixée dans ledit logement, laquelle structure rigide comporte une surface supérieure externe qui s'étend au-delà du ou des logements creux, caractérisé en ce que le revêtement en matière souple est un surmoulage, d'une épaisseur comprise entre 0.25 mm et 0.5mm, lequel surmoulage couvre essentiellement la totalité de la surface supérieure externe de la structure rigide.

Comme matière souple, le caoutchouc est un matériau qui présente de nombreux avantages, notamment il résiste bien à l'abrasion, il offre une qualité de toucher remarquable et il s'usine facilement. La caoutchouc peut être naturel ou synthétique et peut être de différents coloris.

Les caractéristiques de l'invention apparaitront plus clairement à la lecture de plusieurs formes d'exécutions données uniquement à titre d'exemples, nullement limitatives en se référant aux figures schématiques, dans lesquelles :
- La figure 1 représente une coupe transversale partielle d'une lunette de montre, selon la présente invention, dotée d'une pierre ;
- La figure 2 représente une coupe transversale d'une pierre taillée pour être rapportée dans un logement selon la présente invention;
- La figure 3 représente une vue en perspective d'une lunette de montre selon la présente invention ;
- La figure 4 représente une coupe transversale partielle d'une lunette de montre, selon la présente invention, sans pierre ;
- La figure 5 représente une coupe transversale partielle d'un objet de décoration de forme ovale selon la présente invention ; et
- La figure 6 représente une vue en perspective d'un objet de décoration de forme ovale présentant plusieurs logements selon la présente invention.

Selon la forme préférentielle de l'invention, une pièce d'horlogerie comporte une lunette de montre 9 présentant des logements creux 3 dans une matière souple 2 en caoutchouc sur une structure rigide 1, les extrémités supérieures du ou des logements 3 présentant une surface d'appui 40 permettant par compression de ladite matière souple 2 en caoutchouc, sur ladite structure rigide 1, de sertir dans ledit logement 3 une pièce rapportée 5, par exemple une pierre précieuse, dont la périphérie en matière dure a une forme et des dimensions qui correspondent à celles dudit logement 3 et qui présente une partie protubérante 6 qui vient comprimer ladite matière souple 2 en caoutchouc, sur ladite structure rigide 1, lorsque la pierre précieuse 5 est introduite dans ledit logement 3 de manière à ce que la pierre précieuse 5 soit fixée dans ledit logement 3.

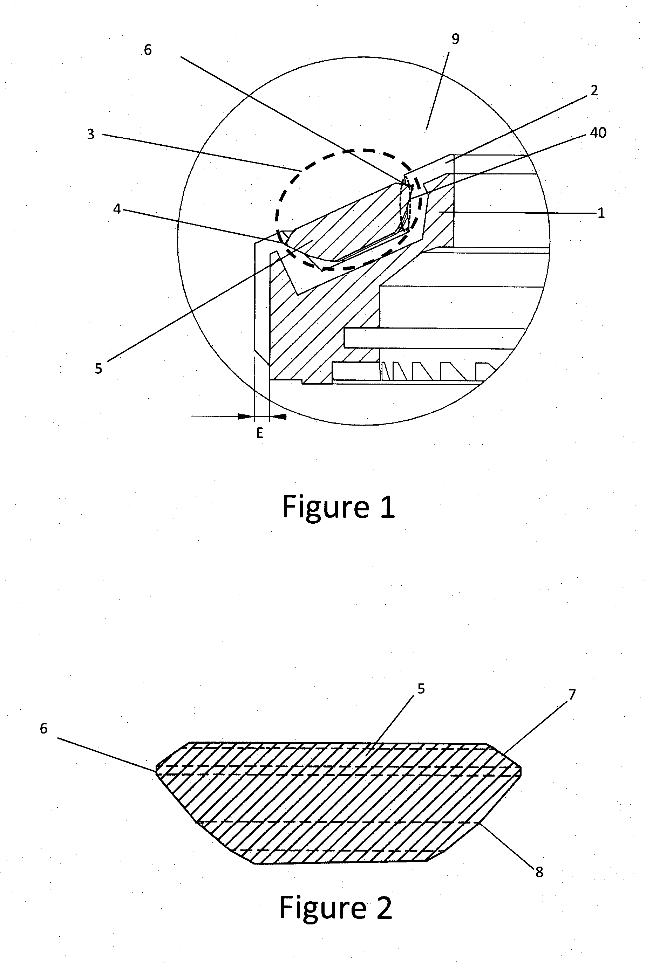

Comme illustrée à la figure 1, une structure rigide 1 de lunette de montre 9 est disposée sous la matière souple 2. La structure rigide 1 de lunette de montre 9 peut, par exemple, être en métal, le revêtement en matière souple 2 étant alors un surmoulage, d'une épaisseur comprise par exemple entre 0.25 mm et 0.5mm, lequel surmoulage couvre essentiellement la totalité de la surface supérieure externe de la structure rigide 1 de lunette de montre 9.

La pièce rapportée 5 vient comprimer le revêtement en caoutchouc 2 contre ladite structure rigide 1 lorsque la pièce rapportée 5 est introduite dans chaque logement 3 de manière à ce que la pièce rapportée 5 soit fixée solidement dans chaque logement 3.

Comme illustré dans la figure 2, la pièce rapportée 5 peut être un élément facetté comme une pierre précieuse, dans laquelle la partie protubérante 6 constituée par le rondiste, ou feuilletis, entre la culasse 8 et la couronne 7, vient comprimer le revêtement en caoutchouc 2 contre ladite structure rigide lorsque la pièce rapportée 5 est introduite dans chaque logement 3.

Dans une autre forme d'exécution, la pièce rapportée 5 peut être en céramique, ou autre matériau permettant d'être travaillé de manière à présenter une partie protubérante 6.

Indépendamment de la forme de la pièce rapportée 5, ronde, ovale, trapèze, rectangle ou autre, c'est la pression de la partie protubérante 6 sur la surface d'appui 40 de chaque logement 3 qui assure le maintien de la pièce rapportée 5 dans le logement 3.

Le revêtement souple en caoutchouc 2 doit être suffisamment rigide pour pouvoir recevoir et maintenir une pièce rapportée comme par exemple une pierre précieuse 5 mais le revêtement souple en caoutchouc 2 ne doit pas être trop dur pour éviter de blesser la pierre rapportée 5. La pièce rapportée 5 étant sertie, un revêtement 2 trop dur impliquerait une force trop importante pour rapporter la pièce 5 dans le logement 3 ce qui aurait pour effet de blesser la pièce rapportée 5.

Le revêtement souple en caoutchouc 2 ou autre élastomère peut être utilisé avec ou, dans une variante, sans une structure rigide 1 pour le maintien de la pièce rapportée 5.

Le ou les logements 3 en matière souple 2 peuvent, par exemple, être obtenus par un procédé de surmoulage ou d'usinage.

Lorsque la matière souple 2 est sous forme d'un revêtement en caoutchouc, l'épaisseur non comprimé de la matière souple 2 est au moins de 0.25 mm.

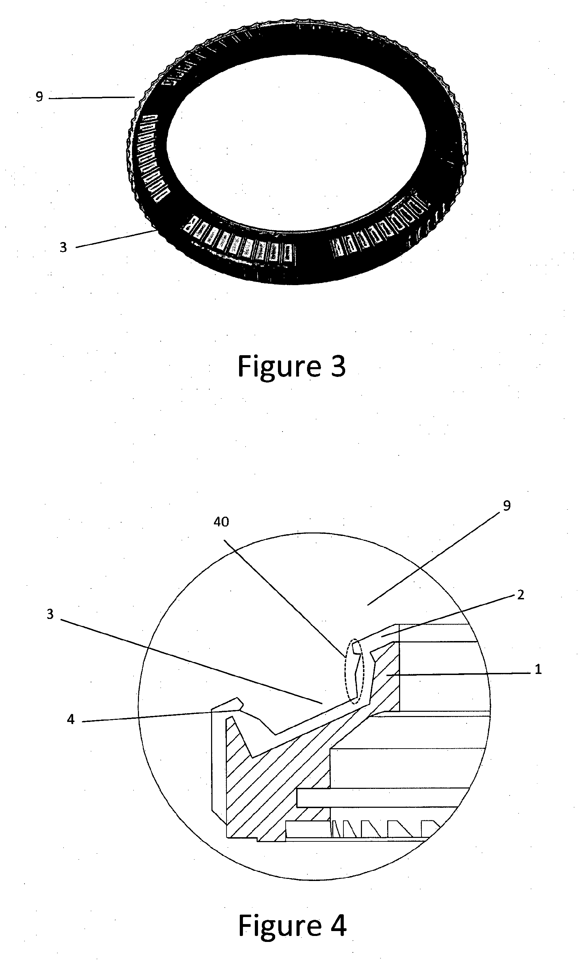

Comme illustré dans la figure 3, une fois le revêtement souple 2 disposé sur la structure rigide 1 de la lunette de montre 9, il n'est plus possible de distinguer la structure métallique 1, laquelle structure rigide 1 peut être optionnelle dans une variante. Dans cet exemple, six blocs de forme allongée comportant chacun neuf logements 3 disposés les uns à côté des autres permettent de recevoir chacun neuf pièces rapportées 5, ceci avec les logements 3 disposés en arc de cercle.

Dans une variante, le logement 3 est de forme allongée permettant de recevoir plusieurs pièces rapportées 5 disposées côte à côte dans ledit logement 3.

Comme illustré aux figures 1 et 4, la surface d'appui 40 du logement 3 comporte optionnellement au moins une creusure 4 qui coopère avec la partie protubérante 6 de la pièce rapportée 5. Cette creusure 4 peut assurer un maintien supplémentaire à la pièce rapportée 5 une fois qu'elle est sertie. La creusure 4 peut être périphérique.

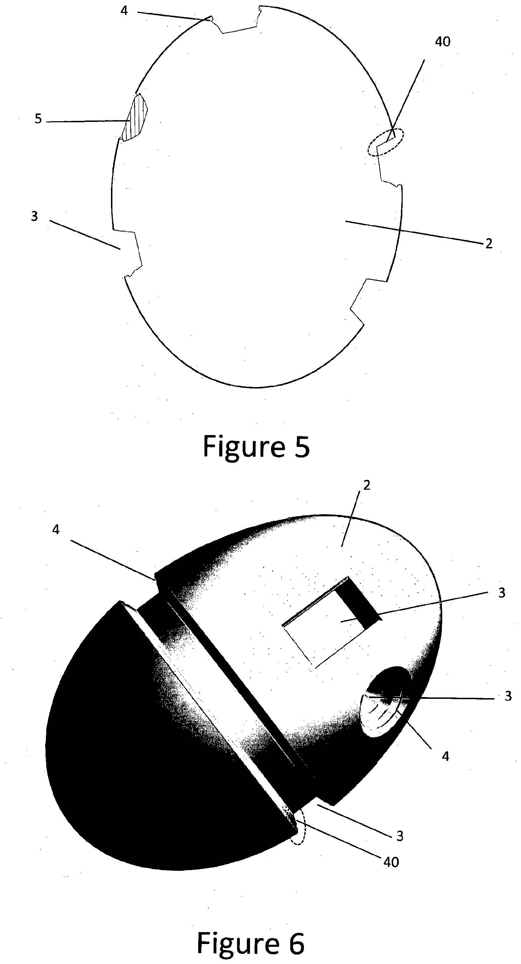

La figure 5 montre une variante d'un objet décoratif comportant un corps de forme ovoïde qui est soit un corps solide en matière souple 2 de type caoutchouc, soit un noyau ou structure rigide 1 revêtu d'une matière souple 2 de type caoutchouc. Dans ce corps, il a été aménagé une série de logements 3 espacés sur toute ou partie de la surface de l'objet décoratif. Ces logements 3 reçoivent des pièces rapportées 5 serties comme décrit ci-dessus. Vu de dessus, lesdits logements 3 ont la forme de polygones, c'est-à-dire qu'ils peuvent être notamment un rectangle, un carré, un triangle, un parallélogramme, un trapèze ou un losange. Dans une variante, lesdits logements 3 peuvent avoir une forme arrondie comme par exemple un cercle ou une ellipse.

Comme illustré dans la figure 6, un autre objet de décoration de forme ovoïde présente un logement 3 de forme ronde, un logement 3 de forme rectangulaire et enfin une gorge ou rainure annulaire munie d'une creusure 4 et dans laquelle une pluralité de pièces rapportées 5, non illustrées, une fois serties, seront accolées les unes aux autres. Cet objet de décoration de forme ovoïde peut avoir un noyau ou une structure rigide 1, par exemple en métal, revêtue d'une matière souple 2 de type caoutchouc ou alors être constitué d'une seule et même matière en élastomère, la partie centrale étant d'une dureté suffisante pour constituer une ossature rigide qui permettra d'utiliser la même matière élastomère, d'une dureté différente et offrant la possibilité de sertir des pièces rapportées 5 sans détériorer ladite pièce rapportée 5 ou ladite matière élastomère de dureté inférieure.

Dans une variante de la figure 6, le logement 3 en forme de gorge annulaire peut être divisé en un nombre de logements 3, chacun pour une pièce rapportée 5 (voir fig 3). Dans le cas d'une gorge annulaire, les deux parties protubérantes 6 de chaque pièce rapportée 5 permettent le maintien de ladite pièce rapportée 5 dans la gorge annulaire. Dans le cas de logements 3 individuels (voir fig 3) les pièces rapportées 5 peuvent être maintenues dans le logement 3 par leur périphérie.

Un autre aspect inventif consiste en une pièce décorative, comportant au moins un logement creux 3 dans une matière souple 2, les extrémités supérieures du ou des logements 3 présentant une surface d'appui 40 permettant par compression de ladite matière souple 2 de sertir dans ledit logement 3 une pièce rapportée 5 , et comportant une pluralité de pièces rapportées 5 disposées côte à côte et serties dans ledit logement 3 ou dans une pluralité de logements 3 disposés côte à côte.

Selon cet autre aspect inventif, chaque logement 3 peut être de forme allongée rectiligne ou courbée ou peut comprendre une pluralité de logements 3 disposés selon une disposition allongée rectiligne ou courbée. Il est également possible d'avoir une série de logements 3 rectangulaires ou arqués, accolés les uns aux autres, formant ensemble une continuité de pièces rapportées 5. D'ailleurs, la figure 3 peut tout aussi bien illustrer une pluralité de pièces rapportées 5 dans six logements 3 de forme arqués que six blocs de forme allongée comportant chacun neuf logements 3 disposés les uns à côté des autres permettent de recevoir chacun neuf pièces rapportées 5, ceci avec les logements 3 disposés en arc de cercle. Selon cette exécution les logements 3 sont de forme allongé et courbée et agencés selon une disposition annulaire.

Selon cet autre aspect inventif, la matière souple 2 est en caoutchouc ou autre élastomère.

Selon cet aspect inventif, chaque pièce rapportée 5 est une pierre dont la partie protubérante 6 est constituée par la partie dite rondiste ou feuilletis 6, entre la culasse 8 et la couronne 7.

Selon cet autre aspect inventif, la matière souple 2 est sous forme d'un revêtement dont l'épaisseur non comprimé est au moins de 0.25 mm.

Toujours selon cet autre aspect inventif, la surface d'appui 40 de chaque logement 3 comporte au moins une creusure 4 qui reçoit la partie protubérante 6 de chaque pièce rapportée 5. Optionnellement, la creusure 4 est périphérique.

Dans une variante de cet autre aspect inventif, une pièce décorative, comporte au moins un logement creux 3 dans une matière souple 2 disposée sur une structure rigide 1, les extrémités supérieures du ou des logements 3 présentant une surface d'appui 40 permettant par compression de ladite matière souple 2 sur ladite structure rigide 1 de sertir dans ledit logement 3 une pluralité de pièces rapportées 5 disposées côte à côte dans ledit logement 3 ou dans une pluralité de logements 3 disposés côte à côte.

Selon cette variante de cet autre aspect inventif, ladite structure rigide 1 est en métal. Optionnellement, ladite structure rigide 1 est de la même matière que ladite matière souple 2, la dureté de ladite structure rigide 1 étant supérieure à la dureté de ladite matière souple 2.

Selon cet autre aspect inventif, le revêtement en matière souple 2 est un surmoulage, d'une épaisseur comprise entre 0.25 mm et 0.5mm, lequel surmoulage couvre essentiellement la totalité de la surface supérieure externe de la structure rigide 1.

Dans l'exemple illustré à la figure 6 et selon cet autre aspect inventif, un objet de décoration dans une matière souple 2, de forme ovoïde, comporte une rainure annulaire 3 munie d'une creusure 4, les extrémités supérieures de la rainure annulaire 3 présentant une surface d'appui 40 permettant par compression de ladite matière souple 2 de sertir dans ledit logement 3 une pluralité de pièces rapportées 5 disposées côte à côte dans ladite rainure 3.

Toujours selon cet autre aspect inventif, une pièce décorative pourrait comporter par exemple deux logements 3 juxtaposés, dans lesquels la pluralité de pièces rapportées 5 disposées côte à côte dans chaque logement 3 donnerait une continuité ou une rangée de pièces rapportées 5.

Selon cet autre aspect inventif, le logement 3 comportant la pluralité de pièces rapportées 5 peut par exemple être de forme allongée rectiligne ou courbée. Par exemple, le logement de forme rectangulaire illustré à la figure 6 pourrait comporter plusieurs pièces rapportées 5 côte à côte.

Selon cet autre aspect inventif, le revêtement souple en caoutchouc 2 ou autre élastomère peut être utilisé avec ou, dans une variante, sans une structure rigide 1 pour le maintien de la pièce rapportée 5.

Le revêtement 2 peut être décliné sous différents coloris ce qui permet de jouer sur l'esthétique de pièce d'horlogerie. On peut par exemple imaginer une montre-bracelet dont le cadran serait noir, la lunette selon la présente invention serait noire et les pierres en émeraudes illumineraient par leur contraste la pièce d'horlogerie.

Outre une montre, la présente invention peut s'appliquer à des objets tels qu'une bague, un collier ou un bracelet par exemple.

On peut envisager d'utiliser la présente invention dans d'autres domaines, comme par exemple la téléphonie pour décorer des téléphones mobiles ou des accessoires du type coques ou pochettes de téléphone, ou des accessoires pour l'automobile comme par exemple un pommeau de vitesse, un volant ou une partie du tableau de bord, ou bien d'autres domaines qui assurent de plus en plus de personnalisation pour chaque client.

## Revendications

1. Elément constitutif d'une pièce décorative, comportant au moins un logement creux (3) dans une matière souple (2) disposée sur une structure rigide (1), les extrémités supérieures du ou des logements (3) présentant une surface d'appui (40) permettant par compression de ladite matière souple (2) sur ladite structure rigide (1) de sertir dans ledit logement (3) une pièce rapportée (5) dont la périphérie en matière dure a une forme et des dimensions qui correspondent à celles dudit logement (3) et qui présente une partie protubérante (6) qui vient comprimer ladite matière souple (2) sur ladite structure rigide (1) lorsque ladite pièce rapportée (5) est introduite dans ledit logement (3) de manière à ce que ladite pièce rapportée (5) soit fixée dans ledit logement (3), laquelle structure rigide (1) comporte une surface supérieure externe qui s'étend au-delà du ou des logement(s) creux (3), **caractérisé en ce que** le revêtement en matière souple (2) est un surmoulage, d'une épaisseur comprise entre 0.25 mm et 0.5mm, lequel surmoulage couvre essentiellement la totalité de la surface supérieure externe de la structure rigide (1).

2. Elément constitutif d'une pièce décorative, selon la revendication 1, dans lequel la matière souple (2) est en caoutchouc.

3. Elément constitutif d'une pièce décorative, selon l'une des revendications précédentes, dans lequel la pièce rapportée (5) est une pierre dont la partie protubérante (6) est constituée par la partie dite rondiste ou feuilletis (6), entre la culasse (8) et la couronne (7).

4. Elément constitutif d'une pièce décorative, selon la revendication 1, dans laquelle ladite structure rigide (1) est en métal.

5. Elément constitutif d'une pièce décorative, selon la revendication 1, dans laquelle ladite structure rigide (1) est de la même matière que ladite matière souple (2), la dureté de ladite structure rigide (1) étant supérieure à la dureté de ladite matière souple (2).

6. Elément constitutif d'une pièce décorative, selon l'une des revendications précédentes dans laquelle ladite surface d'appui (40) du logement (3) comporte au moins une creusure (4) qui reçoit la partie protubérante (6) de la pièce rapportée (5).

7. Elément constitutif d'une pièce décorative, selon la revendication 6, dans lequel la creusure (4) est périphérique.

8. Elément constitutif d'une pièce décorative, selon l'une des revendications précédentes, comportant au moins un logement creux (3) dans une matière souple (2), le ou les logements (3) présentant une surface d'appui (40) permettant par compression de ladite matière souple (2) de sertir dans ledit logement (3) une pluralité de pièces rapportées (5) disposées côte à côte dans ledit logement (3) ou dans une pluralité de logements (3) disposés côte à côte.

9. Elément constitutif d'une pièce décorative selon la revendication 8, où le logement (3) est de forme allongée rectiligne ou courbée.

10. Pièce d'horlogerie sous forme de montre-bracelet, comportant un élément selon l'une des revendications de 1 à 9.

11. Pièce de bijouterie ou de joaillerie comportant un élément selon l'une des revendications de 1 à 9.

12. Elément portatif tel qu'un téléphone portable ou accessoire de téléphonie mobile, comportant un élément selon l'une des revendications de 1 à 9.

13. Accessoire automobile ou élément constitutif d'une automobile comportant un élément selon l'une des revendications de 1 à 9.

## Patentansprüche

1. Element, welches ein dekoratives Teil bildet, aufweisend mindestens eine hohle Aufnahme (3) in einem weichen Material (2), welches auf einer starren Struktur (1) angeordnet ist, wobei die oberen Enden der Aufnahme oder Aufnahmen (3) eine Stützfläche (40) aufweisen, welche es durch Eindrücken des weichen Materials (2) auf der starren Struktur (1) ermöglichen, in der Aufnahme (3) ein eingebrachtes Teil (5), dessen Umfang aus hartem Material eine Form und Abmessungen aufweist, welche jener der Aufnahme (3) entsprechen, einzufassen, und welches einen vorspringenden Abschnitt (6) aufweist, welcher das weiche Material (2) auf der starren Struktur (1) zusammendrückt, wenn das eingebrachte Teil (5) in die Aufnahme (3) eingesetzt wird, damit das eingebrachte Teil (5) in der Aufnahme (3) fixiert wird, wobei die starre Struktur (1) eine obere, äußere Fläche aufweist, welche sich über die hohle(n) Aufnahme(n) (3) hinaus erstreckt, **dadurch gekennzeichnet, dass** die Beschichtung mit weichem Material (2) eine Überspritzung ist mit einer Dicke, welche zwischen 0,25 mm und 0,5 mm liegt, welche Überspritzung im Wesentlichen die gesamte obere, äußere Fläche der starren Struktur (1) bedeckt.

2. Element, welches ein dekoratives Teil bildet, nach Anspruch 1, bei welchem das weiche Material (2) aus Kautschuk besteht.

3. Element, welches ein dekoratives Teil bildet, nach einem der vorhergehenden Ansprüche, bei welchem das eingebrachte Teil (5) ein Stein ist, dessen vorspringender Abschnitt (6) von dem so genannten Rundist oder Gürtel (6) zwischen dem Bodenteil (8) und der Krone (7) gebildet wird.

4. Element, welches ein dekoratives Teil bildet, nach Anspruch 1, bei welchem die starre Struktur (1) aus Metall besteht.

5. Element, welches ein dekoratives Teil bildet, nach Anspruch 1, bei welchem die starre Struktur (1) aus demselben Material besteht wie das weiche Material (2), wobei die Härte der starren Struktur (1) größer als die Härte des weichen Materials (2) ist.

6. Element, welches ein dekoratives Teil bildet, nach einem der vorhergehenden Ansprüche, bei welchem die Stützfläche (40) der Aufnahme (3) mindestens eine Einsenkung (4) aufweist, welche den vorspringenden Abschnitt (6) des eingebrachten Teils (5) aufnimmt.

7. Element, welches ein dekoratives Teil bildet, nach Anspruch 6, bei welchem die Einsenkung (4) umlaufend ist.

8. Element, welches ein dekoratives Teil bildet, nach einem der vorhergehenden Ansprüche, aufweisend mindestens eine hohle Aufnahme (3) aus einem weichen Material (2), wobei die Aufnahme oder Aufnahmen (3) eine Stützfläche (40) aufweisen, welche es durch Eindrücken des weichen Materials (2) ermöglichen, in der Aufnahme (3) eine Vielzahl von eingebrachten Teilen (5), welche nebeneinander angeordnet sind, in der Aufnahme (3) oder in einer Vielzahl von nebeneinander angeordneten Aufnahmen (3) einzufassen.

9. Element, welches ein dekoratives Teil bildet, nach Anspruch 8, wo die Aufnahme (3) von langgestreckter, gerader oder gebogener Form ist.

10. Uhr in der Form einer Armbanduhr, aufweisend ein Element nach einem der Ansprüche 1 bis 9.

11. Schmuck- oder Juwelierartikel, aufweisend ein Element nach einem der Ansprüche 1 bis 9.

12. Tragbares Element, wie beispielsweise ein tragbares Telefon oder Zubehör für ein Mobiltelefon, aufweisend ein Element nach einem der Ansprüche 1 bis 9.

13. Zubehör für ein Automobil oder Bestandteil eines Automobils, aufweisend ein Element nach einem der Ansprüche 1 bis 9.

## Claims

1. A constituent element of a decorative item, comprising at least one hollow recess (3) in a flexible material (2) arranged on a rigid structure (1), the upper ends of the recess or recesses (3) having a bearing surface (40) by means of which it is possible, by compression of said flexible material (2) on said rigid structure (1), to set in said recess (3) an added part (5) whose periphery made of hard material has a shape and dimensions which correspond to those of said recess (3) and which has a projecting portion (6) which compresses said flexible material (2) on said rigid structure (1) when said added part (5) is introduced into said recess (3) such that said added part (5) is secured in said recess (3), said rigid structure (1) comprises an outer upper surface which extends beyond said recess or recesses (3), **characterized in that** the coating in a flexible material (2) is an overmolding of a thickness between 0.25 mm and 0.5mm, which overmolding covers essentially all of the outer upper surface of the rigid structure (1).

2. The constituent element of a decorative item, as claimed in claim 1, in which the flexible material (2) is made of rubber.

3. The constituent element of a decorative item, as claimed in one of the preceding claims, in which the added part (5) is a stone whose projecting portion (6) consists of the portion known as the girdle (6), between the pavilion (8) and the crown (7).

4. The constituent element of a decorative item, as claimed in claim 1, in which said rigid structure (1) is made of metal.

5. The constituent element of a decorative item, as claimed in claim 1, in which said rigid structure (1) is made of the same material as said flexible material (2), the hardness of said rigid structure (1) being greater than the hardness of said flexible material (2).

6. The constituent element of a decorative item, as claimed in one of the preceding claims in which said bearing surface (40) of the recess (3) comprises at least one indentation (4) which receives the projecting portion (6) of the added part (5).

7. The constituent element of a decorative item, as claimed in claim 6, in which the indentation (4) is peripheral.

8. The constituent element of a decorative item, as claimed in one of the preceding claims, comprising at least one hollow recess (3) in a flexible material (2), the recess or recesses (3) having a bearing surface (40) by means of which it is possible, by compression of said flexible material (2), to set in said recess (3) a plurality of added parts (5) arranged side-by-side in said recess (3) or in a plurality of recesses (3) arranged side-by-side.

9. The constituent element of a decorative item as claimed in claim 8, in which the recess (3) is elongate, straight or curved.

10. A timepiece in the form of a wristwatch, comprising an element as claimed in one of claims 1 to 9.

11. Jewelry item comprising an element as claimed in one of claims 1 to 9.

12. Portable element such as a mobile phone or mobile phone accessory, comprising an element as claimed in one of claims 1 to 9.

13. Automobile accessory or constituent element of an automobile comprising an element as claimed in one of claims 1 to 9.
